# EUROPÄISCHE PATENTSCHRIFT

(11) **EP 0 897 505 B1**
(45) Veröffentlichungstag und Bekanntmachung des Hinweises auf die Patenterteilung: **29.08.2001**
(21) Anmeldenummer: 97920887.3
(22) Anmeldetag: 06.05.1997
(51) Int. Cl.: F16L 21/00

(54) **ROHRKUPPLUNG**
PIPE COUPLING
RACCORD DE TUYAU

(30) Priorität: 10.05.1996 DE 29608499 U
(43) Veröffentlichungstag der Anmeldung: 24.02.1999
(73) Patentinhaber: Ilesic, Peter, 2000 Maribor (SI)
(72) Erfinder: Ilesic, Peter, 2000 Maribor (SI)
(74) Vertreter: Konnerth, Dieter Hans
(86) Internationale Anmeldenummer: IB9700503
(87) Internationale Veröffentlichungsnummer: WO9743571

(56) Entgegenhaltungen:
- EP-A- 0 211 158
- EP-A- 0 551 582
- EP-A- 0 667 476
- WO-A-96/07046
- CH-A- 676 875
- DE-A- 2 428 101
- DE-A- 4 408 743

## Beschreibung

Die Erfindung betrifft eine Rohrkupplung mit den Merkmalen des Oberbegriffs des Anspruchs 1.

Aus der DE 44 08 743 C2 ist eine als Rohrkupplung verwendbare Dichtvorrichtung für Rohrleitungen bekannt. Eine elastomere Dichtungsmanschette ist in einem schließbaren und an einer Rohrleitung verspannbaren Gehäuse aufgenommen. Das Gehäuse weist stirnseitig radial einwärts gerichtete End- oder Abschlußwände auf, an denen die ebenen Stirnseiten der Dichtungsmanschette anliegen. Beim Schließen und verengenden Verspannen des Gehäuses und der Dichtungsmanschette an den Rohren einer Rohrleitung verbleibt üblicherweise ein Spalt zwischen den Abschlußwänden des Gehäuses und der jeweiligen Rohrwand, Durch diesen Spalt kann Verschmutzung zu der elastomeren Dichtungsmanschette gelangen und sie kann UV-Strahlung, Ozon oder anderen schädlichen äußeren Einflüssen ausgesetzt sein, was zu einer Verschlechterung der elastomeren Werkstoffeigenschaften und zu Undichtigkeiten führen kann.

Aus der EP 0 551 582 A1 ist eine Rohrkupplung bekannt geworden, die ein beim Schließen verengbares Gehäuse mit einer darin angeordneten elastomeren Dichtungsmanschette mit jeweils einer durch einen Federring gegen eine Rohraußenwand gedrückten Dichtlippe aufweist. Jede Stirnseite der Dichtungsmanschette ist in einander entgegengesetzte konische Flächen unterteilt, die von einem im Querschnitt V-förmigen Stützring umgriffen sind. Ein Spannring stützt sich mit seinem äußeren Rand in einer von einer Gehäuseendwand und einem Gehäusemantel gebildeten Kehle ab. Im inneren Randbereich weist der Spannring eine Vielzahl von durch schlitzartige Ausnehmungen gebildete Lamellen auf. Mit diesem lamellierten Bereich liegt der Spannring an der inneren Flanke des Stützringes an. Beim Schließen und Verengen des Gehäuses der Rohrkupplung verkrallen sich die Endkanten dieser Lamellen an den zu verbindenden Rohrenden. Bei dieser Rohrkupplung ist der Stützring mit der speziellen doppeltkonischen Formgebung der Stirnseite der Dichtungsmanschette erforderlich, um ein Wegfließen des elastomeren Materials der Dichtungsmanschette durch die Ausnehmungen zwischen den Lamellen des Spannringes zu verhindern.

Schließlich ist aus der CH-A-676 875 ist eine Spannmuffenanordnung mit einer in einem Gehäuse angeordneten Dichtungsmanschette bekannt geworden. Die Dichtungsmanschette weist einen zentralen Anschlagwulst auf, an dem beidseits die Enden zweier zu verbindender Rohre anliegen. An den beiden axialen Enden der Dichtungsmanschette sind jeweils zwei Dichtkanten vorgesehen, die sich an den jeweiligen Rohrumfang anlegen. An den beiden Stirnseiten der Dichtungsmanschette liegt ein Verankerungs- oder Spannring an, der hohlkegelförmig gebildet ist und sich außen am Gehäuse an der Umbiegung eines Endflansches abstützt. Beim Spannen des Gehäuses gelangt der innere Rand der Verankerungsringe mit dem gesamten Außenumfang der Rohre in Eingriff und verkrallt sich dort. Damit werden die Rohrenden durch Formschluß axial gegen den Anschlagwulst festgehalten. Zu diesem Zweck kann der innere Rand der Verankerungs- oder Spannringe konkav ausgebildet sein, so daß sich eine dadurch gebildete Schneide in die Außenfläche der Rohre eingräbt.

Der Erfindung liegt die Aufgabe zugrunde, eine Rohrkupplung mit den Merkmalen des Oberbegriffs des Anspruchs 1 hinsichtlich einfachem Aufbau, Funktionalität und universeller Verwendbarkeit zu verbessern.

Diese Aufgabe wird erfindungsgemäß durch eine Rohrkupplung mit den Merkmalen des Anspruchs 1 gelöst. Vorteilhafte Ausgestaltungen der Erfindung sind in den Unteransprüchen angegeben.
Durch den konischen Spannring, der sich an der abgeschrägten, vorzugsweise als Innenkonus ausgebildeten Stirnseite der Dichtungsmanschette anlegt und am Gehäuse abstützt, wird bei geschlossenem und an einer Rohrleitung verspanntem Gehäuse ein Schutz der Dichtungsmanschette gegen von außen eindringende nachteilige Umwelteinflüsse geschaffen. Der Spannring kann einen Spalt ausgleichen, der je nach Größe bzw. Durchmesser der Rohrkupplung und der zu kuppelnden Rohre zwischen dem Gehäuse und der Rohroberfläche in unterschiedlicher Größe vorhanden sein kann.

Der Innenrand des Spannringes ist abgerundet, so daß der Spannring in der verspannten Betriebsstellung an einer Rohrleitung auf der Oberfläche der zu verbindenden Rohre gleiten kann. Somit können axiale Bewegungen der beiden Rohre relativ zueinander ausgeglichen werden, da auch die Dichtungsmanschette durch entsprechende elastische Verformung eine gewisse axiale Bewegung erlaubt.

Nachfolgend wird die Erfindung anhand eines Ausführungsbeispiels unter Bezugnahme auf Zeichnungen näher erläutert. Es zeigt:
- Fig. 1: in einer Schnittansicht in schematischer, vereinfachter Teildarstellung eine Rohrkupplung mit einem Ausführungsbeispiel eines Spannringes mit geöffnetem, unverspanntem Gehäuse;
- Fig. 2: in einer Ansicht entsprechend Fig. 1 die Rohrkupplung mit geschlossenem Gehäuse und an eine Rohrleitung angepreßter Dichtungsmanschette;
- Fig. 3: in einer perspektivischen Draufsicht die Rohrkupplung in aufgeschnittener Darstellung;
- Fig. 4: in einer Draufsicht den erfindungsgemäßen Spannring; und
- Fig. 5: in einer Seitenansicht im Teilschnitt den Spannring der Fig. 4.

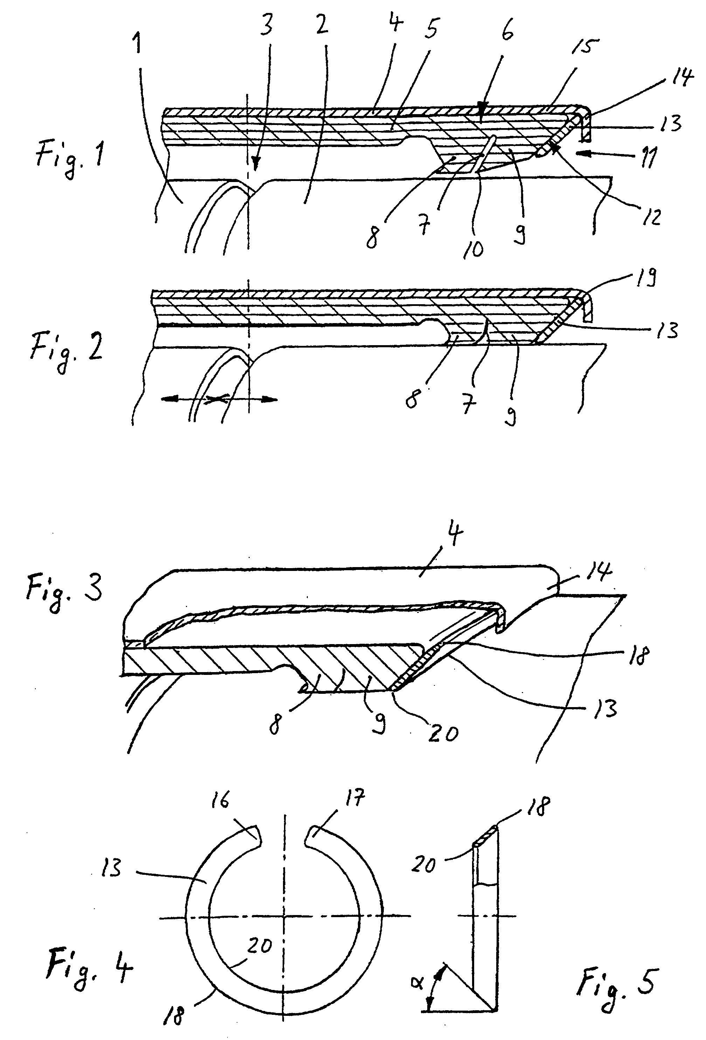

Die in den Fig. 1 bis 3 dargestellte Rohrkupplung mit elastomerer Dichtungsmanschette stimmt im wesentlichen mit der in der DE 44 08 743 C2 beschriebenen Dichtvorrichtung überein, deren Inhalt durch ausdrückliche Bezugnahme in diese Anmeldung aufgenommen wird. Daher wird nachfolgend nur auf die für das Verständnis der vorliegenden Erfindung wesentlichen Elemente der Rohrkupplung eingegangen.

Die Rohrkupplung ist zum Verbinden und Abdichten von zwei Rohren 1 und 2 einer Rohrleitung in etwa zentrisch zu einer Verbindungsstelle 3 der beiden Rohrenden angeordnet (der spiegelsymmetrisch ausgebildete linke Teil der Rohrkupplung ist nicht dargestellt). In einem Gehäuse 4 ist eine Dichtungsmanschette 5 aus elastomerem Werkstoff angeordnet, die an ihren beiden axialen Endbereichen jeweils einen Ringwulst 6 aufweist. Das Gehäuse 4 ist mit einer Verschlußeinrichtung (nicht dargestellt) versehen, so daß es an der vorgesehenen Rohrkupplungs- oder Rohrverbindungsstelle 3 geschlossen und dabei verengt werden kann, wobei die Dichtungsmanschette 5 mit ihren beiden Ringwülsten 6 radial an die Rohre 1 bzw. 2 angedrückt wird. Durch einen ringförmigen, zur Längsachse der Rohrkupplung geneigten Spalt 7 wird jeder Ringwulst 6 in zwei benachbarte Radialwülste 8, 9 unterteilt, wobei der äußere Radialwulst 9 eine spitzwinkelige, einwärts weisende Dichtlippe 10 bildet.

Jede axiale Stirnseite 11 der Dichtungsmanschette 5 ist konisch einwärts zur Längsachse der Rohrkupplung abgeschrägt. An dieser konischen Ringfläche 12 liegt ein Spannring 13 aus Federstahl oder dergleichem Material an, der zwischen der Dichtungsmanschette 5 und einer radialen Endwand 14 des Gehäuses 4 eingefügt ist und sich axial und radial in einer Kehle 19, die vom zylindrischen Gehäuseteil 15 und der Endwand 14 gebildet ist, abstützt. Der Spannring 13 kann sich jedoch auch an einer ringförmigen Erhebung oder einer Nut am Gehäuse 4 abstützen. Der Spannring 13 ist an seinem Umfang unterteilt (siehe Fig. 4). Seine beiden Enden 16, 17 können überlappend oder derart voneinander beabstandet angeordnet sein, daß sie sich beim Verspannen des Gehäuses 4 nahezu berühren. Der Spannring 13 weist einen Konuswinkel a von zweckmäßigerweise etwa 45° auf (siehe Fig. 5), kann jedoch auch größer oder kleiner gewählt werden. Der Winkel der konischen Ringfläche 12 der Dichtungsmanschette 5 ist zweckmäßigerweise von vergleichbarer Größe. Jedoch muß die Ringfläche 12 nicht streng konisch sein. Sie kann auch einwärts gekrümmt sein, wobei sich der elastische Werkstoff der Dichtungsmanschette 5 dennoch an den Spannring 13 anlegt.

Der Außenrand 18 des Spannringes 13 ist im Längsquerschnitt betrachtet abgerundet und an die Kehle 19 des Gehäuses 4 angepaßt. Der Innenrand 20 des Spannringes 13 ist ebenso abgerundet, so daß sich beim Verspannen und beim radialen Verengen des Gehäuses 4 und der Dichtungsmanschette 5 der Innenrand 20 des Spannringes 13 an die Außenseite des jeweiligen Rohres 1 bzw. 2 dicht anlegt. Damit ist gewährleistet, daß weder Verschmutzung noch andere unerwünschte oder schädliche Umwelteinflüsse wie UV-Strahlung oder Ozon an die Dichtungsmanschette 5 gelangen können. Der Spannring 13 hat in diesem Fall die Funktion eines Schutzringes. Bei einer Axialbewegung eines oder beider Rohre 1, 2 kann der Spannring 13 auf dem oder den Rohren unter Beibehaltung der Dichtwirkung gleiten. Daher kann die Rohrkupplung auch als Längenkompensator eingesetzt werden. Des weiteren übt der Spannring 13 in an einer Rohrleitung verspanntem Zustand Druck in axialer Richtung auf den äußeren Radialwulst 9 aus und verhindert ein Abfließen des elastomeren Werkstoffes durch den Spalt zwischen der Endwand 14 des Gehäuses 4 und dem Rohr 1 bzw. 2 über die Lebensdauer der Dichtungsmanschette 5.

## Patentansprüche

1. Rohrkupplung mit einer elastomeren Dichtungsmanschette (5), die in einem schließbaren Gehäuse (4) mit radialen Endwänden (14) angeordnet ist und zwei axial beabstandete und radial einwärts hervorstehende Ringwülste (6) zum abdichtenden Anlegen an eine Rohrleitung (1, 2) aufweist,
wobei jeder Ringwulst (6) durch einen ringförmigen, zur Längsachse der Rohrkupplung spitzwinklig angeordneten Spalt (7) in zwei benachbarte Radialwülste (8, 9) unterteilt ist und durch diesen Spalt (7) am äußeren Radialwulst (9) eine spitzwinklige Dichtlippe (10) gebildet ist, und wobei der ringförmige Spalt (7) durch elastische Verformung der beiden angrenzenden Radialwülste (8, 9) zusammendrückbar ist, und
wobei jede Stirnseite (11) der Dichtungsmanschette (5) zur Längsachse der Rohrkupplung hin einwärts geneigt ist und daran ein konischer, am Umfang unterteilter Spannring (13) anliegt, der sich axial und radial am Gehäuse (4) abstützt und beim verengenden Schließen des Gehäuses (4) und Verspannen der Dichtungsmanschette (5) am jeweiligen Rohr (1 bzw. 2) der Rohrleitung anliegt,
**dadurch gekennzeichnet, daß**
der Spannring (13) einen abgerundeten Innenrand (20) aufweist.

2. Rohrkupplung nach Anspruch 1, **dadurch gekennzeichnet**, daß die einwärts geneigte Stirnseite (11) im wesentlichen als Innenkonus (12) ausgebildet ist.

3. Rohrkupplung nach Anspruch 1 oder 2, **dadurch gekennzeichnet**, daß der Spannring (13) einen Konuswinkel α von etwa 45° aufweist.

4. Rohrkupplung nach einem der Ansprüche 1 bis 3, **dadurch gekennzeichnet**, daß der Spannring (13) einen abgerundeten Außenrand (18) aufweist.

5. Rohrkupplung nach einem der Ansprüche 1 bis 4, **dadurch gekennzeichnet**, daß der Spannring (13) aus Federstahl hergestellt ist.

## Claims

1. A pipe coupling with an elastomeric packing collar (5) disposed in a closable housing (4) with radial end walls (14) and having two ring-shaped beads (6) axially spaced apart and projecting radially inwards for sealingly lying against a pipeline (1, 2),
wherein each ring-shaped bead (6) is subdivided into two adjacent radial beads (8, 9) by a ring-shaped gap (7) disposed at an acute angle to the longitudinal axis of the pipe coupling, and an acute-angled packing lip (10) is formed by this gap (7) on the outer radial bead (9), and wherein the ring-shaped gap (7) may be pressed together by elastic deformation of the two adjacent radial beads (8, 9), and
wherein each front side (11) of the packing collar (5) is inclined inwards towards the longitudinal axis of the pipe coupling, and has lying against it a conical clamping ring (13) that is subdivided at its circumference and is supported axially and radially on the housing (4) and lies on the respective pipe (1 or 2) of the pipeline when the housing (4) is narrowed and closed and the packing collar (5) is tightened.
**characterized in that**
the clamping ring (13) has a rounded inner edge (20).

2. A pipe coupling according to claim 1, **characterized in that** the inwardly inclined front side (11) is substantially designed as an inner cone (12).

3. A pipe coupling according to claim 1 or 2, **characterized in that** the clamping ring (13) has a cone angle α of about 45°.

4. A pipe coupling according to any one of claims 1 to 3, **characterized in that** the clamping ring (13) has a rounded outer edge (18).

5. A pipe coupling according to any one of claims 1 to 4, **characterized in that** the clamping ring (13) is made of spring steel.

## Revendications

1. Raccord de tuyau avec une manchette d'étanchéité élastomère (5), placée dans un boîtier (4) pouvant être fermé, et muni de parois terminales radiales (14), et qui présente deux boudins annulaires (6) à distance axiale et dépassant radialement vers l'intérieur pour l'application étanche contre une conduite de tuyaux (1, 2), chaque boudin annulaire (6) étant divisé en deux boudins radiaux adjacents (8, 9) par une fente (7) en forme d'anneau, placée de façon acutangulaire par rapport à l'axe longitudinal du raccord de tuyau, et une lèvre d'étanchéité (10) acutangulaire étant formée par cette fente (7) sur le boudin radial (9) extérieur, et la fente annulaire (7) pouvant être pressée par déformation élastique des deux boudins radiaux (8, 9) adjacents, et chaque côté frontal (11) de la manchette d'étanchéité (5) étant incliné vers l'intérieur par rapport à l'axe longitudinal du raccord de tuyaux, et un anneau de serrage (13) conique et divisé sur sa circonférence y étant adjacent, cet anneau s'appuyant axialement et radialement sur le boîtier (4) et étant adjacent au tuyau respectif (1 ou 2) de la conduite lors de la fermeture par rétrécissement du boîtier (4) et du serrage de la manchette d'étanchéité (5), **caractérisé en ce que** l'anneau de serrage (13) présente un bord intérieur (20) arrondi.

2. Raccord de tuyau selon la revendication 1, **caractérisé en ce que** le côté frontal (11) incliné vers l'intérieur est formé essentiellement comme cône intérieur (12).

3. Raccord de tuyau selon la revendication 1 ou 2, **caractérisé en ce que** l'anneau de serrage (13) présente un angle de cône α d'environ 45°.

4. Raccord de tuyau selon l'une des revendications 1 à 3, **caractérisé en ce que** l'anneau de serrage (13) présente un bord extérieur (18) arrondi.

5. Raccord de tuyau selon l'une des revendications 1 à 4, **caractérisé en ce que** l'anneau de serrage (13) est fabriqué en acier à ressorts.
